# EUROPEAN PATENT SPECIFICATION

(11) **EP 3 463 768 B1**
(45) Date of publication and mention of the grant of the patent: **13.05.2020**
(21) Application number: 16724419.3
(22) Date of filing: 23.05.2016
(51) Int. Cl.: B25J 19/00

(54) **SPRING BALANCING DEVICE AND INDUSTRIAL ROBOT COMPRISING A SPRING BALANCING DEVICE**
FEDERAUSGLEICHSVORRICHTUNG UND INDUSTRIEROBOTER MIT EINER FEDERAUSGLEICHSVORRICHTUNG
DISPOSITIF D'ÉQUILIBRAGE À RESSORT ET ROBOT INDUSTRIEL COMPRENANT UN DISPOSITIF D'ÉQUILIBRAGE À RESSORT

(43) Date of publication of application: 10.04.2019
(73) Proprietor: ABB Schweiz AG, 5400 Baden (CH)
(72) Inventor: THULIN, Mats, 725 97 Västerås (SE); OLSSON, Mats, 722 31 Västerås (SE); WESTRÖM, Jakob, 724 60 Västerås (SE)
(74) Representative: Kransell & Wennborg KB
(86) International application number: PCT/EP2016/061574
(87) International publication number: WO 2017/202445

(56) References cited:
- DE-C1- 19 801 229
- GB-A- 1 236 641

## Description

### TECHNICAL FIELD

The present invention relates to a spring balancing device comprising a spring housing extending along a central axis and enclosing a spring arrangement; a spring counter force member configured to provide a counter force to hold the spring arrangement; a locking member bore formed in a housing wall section of said spring housing and extending in a transversal direction relative the central axis; a locking member extending through the locking member bore and comprising a non-threaded portion configured to be in contact with the spring counter force member for holding the spring arrangement.

The present invention furthermore relates to industrial robots comprising the above-mentioned spring balancing cylinder.

### BACKGROUND ART

Industrial robots comprise a spring balancing device, such as a spring balancing cylinder configured to function as a counter balance when the robot arm is in an extended position or when there is a heavy load at the end of the robot arm. The spring balancing cylinder comprises a spring arrangement, which is coaxially installed inside a spring housing. A rod is mounted in the spring housing and is releasably coupled to a spring arrangement and may be coupled to a robot arm. The spring housing per se may be coupled to a crank member of the robot.

The spring balancing device is typically configured to generate a torque, during rotation of the robot arm from a rest position, which torque acts to return the robot arm back to a rest position. When the robot is subjected to severe gravitational torque, e.g. due to a heavy load handling, this is balanced by the spring balancing cylinder and the spring arrangement. The expression rotation back to the rest position means a rotation that counteracts and hence compensates for the gravitational force.

During transport of the spring balancing cylinder and during the assembly of the spring balancing cylinder to the robot it is known to use pins or screws arranged in the spring housing and in contact with a spring counter force member, such as a spring plate, for holding the spring arrangement in a fixed position in the spring housing, without allowing any movement in the axial direction.

Prior art spring balancing devices often use a locking member that is difficult and unsecure to dismount for releasing the spring arrangement.

JPH 10225891 teaches a spring balancing cylinder arrangement having pins arranged to lock a spring arranged in a cylinder. The pins are inserted transverse to the longitudinal direction of the cylinder.

JPH 0524293 teaches a cylinder having an axial adjustment arrangement being engaged with a spring counter force member for holding a spring mounted in the cylinder. A motor is arranged in the cylinder for moving the adjustment arrangement for providing compression or extension of the spring.

DE 198 01 229 C1 teaches a spring balancing cylinder comprising the features of the preamble of claim 1.

Thus, there are needs to provide a spring balancing device that is easy to assemble and disassemble and that is safe in handling.

These needs cannot be fulfilled by the constructions shown in the above-mentioned prior art.

### SUMMARY OF THE INVENTION

An object of the present disclosure is to provide a spring balancing device which seeks to mitigate, alleviate, or eliminate one or more of the above-identified deficiencies in the art and disadvantages singly or in any combination.

According to an aspect of the present disclosure there is provided a spring balancing device comprising a spring housing enclosing a spring arrangement; a spring counter force member configured to provide a counter force to hold the spring arrangement; a locking member bore formed in a housing wall section of said spring housing; a locking member extending through the locking member bore and comprising a non-threaded portion configured to be in contact with the spring counter force member for holding the spring arrangement; the locking member comprises a threaded portion mating with a corresponding threaded bore section of the locking member bore; and the non-threaded portion has such a length so that when the threaded portion is not engaged with the threaded bore section, the non-threaded portion remains in contact with the spring counter force member for retaining said holding of the spring arrangement.

In such way is achieved that a safe handling of the spring balancing device is possible, e.g. when dismounting the spring housing or disassembling the spring balancing device from a robot arm.

There is thus achieved that a spring balancing device can be disassembled from a robot arm or a coupling device, by disconnecting the rod or the coupling device from the spring arrangement, by securing the spring arrangement in a safe way.

Thereby is achieved that unintentional unscrewing of the locking member implies that the locking member still will be in contact with the spring counter force member and securely holding the spring arrangement.

In such way is achieved that the locking member is restrained to be unintentionally removed from the spring housing.

In such way is achieved that a spring force corresponding with said counter force exerted by the spring arrangement will press a portion of the locking member against the locking member bore. This will develop a frictional force between the locking member and the locking member bore and locking the locking member from being removed from the spring housing.

In such way is achieved that the locking member securely holds the spring counter force member and the spring arrangement in a compressed or stretched state, wherein e.g. a rod can be disconnected from the spring arrangement and free to move for coupling with a robot arm of a robot apparatus or other service application.

In one embodiment, the locking member bore is positioned in a plane extending transverse to a central axis of the spring housing.

In such a way is achieved that also the locking member will be positioned in a plane extending transverse to the central axis of the spring housing and thereby it is possible that the entire side of the locking member can be in contact with the spring counter force member.

In one embodiment, the extension of the threaded bore section corresponds with the extension of the locking member bore in the transversal direction.

Preferably, the locking member bore is a through hole.

In one embodiment, the spring housing comprises at least two locking member bores and the device comprises a locking member for each locking member bore.

In such way is achieved that the spring counter force member can be held straight, wherein no tilting of the spring counter force member will occur.

In one embodiment, the locking member bores are positioned symmetrically in a plane extending transverse to a central axis of the spring housing.

In one embodiment, the locking member bores are arranged parallel to each other.

In one embodiment, the locking member bores exhibit a respective entry opening facing from the same side of the spring housing.

Thereby is achieved that the locking members can be reached from one side of the spring balancing device.

Suitably, the threaded portion comprises at least three thread turns.

In such way is achieved that an absolute thread locking frictional force is provided, wherein the non-threaded portion is securely kept in contact with the spring counter force member.

Preferably, the threaded portion is positioned at a first end of the locking member.

Suitably, the first end comprises an engagement element, such as a socket head cap, or a screw driver slot.

In one embodiment, a distance between the entry openings is defined in said plane by an arc of a circle measuring an angle of 50-110 degrees, preferably 70-90 degrees.

In one embodiment, the locking member bore comprises a non-threaded bore section with a smaller diameter than that of the threaded bore section.

In one embodiment, a non-threaded bore section of the locking member bore exhibits a larger diameter than a diameter of the non-threaded portion of the locking member such that a gap is formed between the locking member bore and the locking member that produces a jamming effect between the locking member bore and the locking member.

The locking member will be jammed due to the "sticky drawer effect" and due to centering error of the locking member relative the locking member bore in the case the locking member is unintentionally unscrewed and promotes that the locking member can be mounted and demounted from the spring housing.

In one embodiment, the length of the threaded portion extends not more than one third of the total length of the locking member.

In such way is achieved that that the non-threaded portion provides a sufficient contact area for said contact with the spring counter force member in the case the locking member is unintentionally unscrewed.

In one embodiment, a first bevelled portion is formed between the threaded portion and the non-threaded portion, the first bevelled portion mating with a bevelled section of the locking member bore.

In such way is achieved that the locking member can be mounted and drawn tightly to the spring housing.

In one embodiment, the non-threaded portion comprises an enlarged portion configured to be in contact with the spring counter force member. Thus such an enlarged portion has a diameter that is larger than the diameter of other parts of the non-threaded portion. Such an enlarged portion is preferably an end portion of the locking member.

In such way is provided a well-defined contact area of the non-threaded portion.

In one embodiment, the enlarged portion is positioned at an imaginary line intersecting with a central axis of the spring housing.

In one embodiment, the enlarged portion exhibits a second bevelled portion configured to engage an edge area of the locking member bore.

In such way is achieved that the locking member will hook in the edge area of the locking member bore in the case service personnel unintentionally tries to remove the locking member from the spring housing.

In one embodiment, the locking member comprises an intermediate portion having a smaller diameter than that of the threaded portion.

In such way is provided that the locking member is kept in position for locking the spring counter force member in the case the locking member is unintentionally unscrewed.

In one embodiment the device comprises at least two locking members located in their respective locking member bores, wherein the locking member bores and the locking members are located such that a contact force between the locking members and the spring counter force member is evenly distributed on the spring counter force member. By making sure that the contact force is evenly distributed onto the spring counter force member is ensured that this member will not be twisted and turn inside the housing.

In all embodiments, the spring arrangement is connectable to a rod member. Usually, the rod member is connectable to the spring counter force member that holds the spring arrangement. At the other end, the rod member can be connected to e.g. an arm of an industrial robot, thus connecting he spring balancing device to an industrial robot.

The spring arrangement may comprise a compression spring or a tension spring. The spring arrangement may comprise a set of springs, i.e. more than one spring.

The locking member (or members) is preferably removable such that when the balancing device has been connected to a connection rod and mounted on a robot, the locking member is removed.

According to an aspect of the present disclosure, there is provided an industrial robot comprising the spring balancing device according to any of claims 1-15.

In such way is provided an industrial robot having a spring balancing device comprising a disconnectable rod member, which spring balancing device can be securely mounted to the robot.

### BRIEF DESCRIPTION OF THE DRAWINGS

The present invention will be explained in greater detail with reference to the accompanying schematic drawings, wherein
Fig. 1 shows a robot apparatus comprising a spring balancing device according to one embodiment of the invention;
Fig. 2 shows one embodiment of a spring balancing device;
Fig. 3 shows one embodiment of a spring balancing device;
Fig. 4a and 4b show one embodiment of a spring balancing device; and
Fig. 5a and 5b show one embodiment of a spring balancing device.

### DESCRIPTION OF ALTERNATIVE EMBODIMENTS

Hereinafter, embodiments of the present invention will be described in detail with reference to the accompanying drawings, wherein for the sake of clarity and understanding of the invention some details of no importance may be deleted from the drawings.

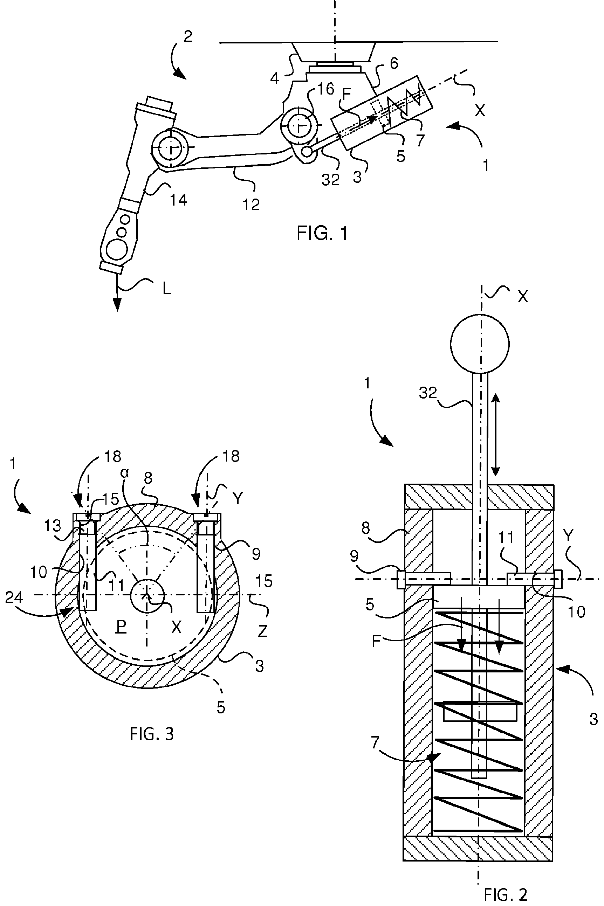

Fig. 1 shows a spring balancing device 1 of an industrial robot 2. The spring balancing device 1 comprises a spring housing 3 extending along a central axis X and enclosing a spring counter force member 5 configured to hold a compressed spring arrangement 7 inside the spring housing 3. The spring counter force member 5 is configured to provide a counter force F to hold the spring arrangement 7 in a compressed state.

The industrial robot 2 comprises a robot fundament 4, a stand 6 configured to pivot on the robot fundament 4. A first robot arm 12 is coupled to a joint 16 on the stand 6. The first robot arm 12 is configured to pivot about a horizontal axis of rotation of the joint 16 and supports a second robot arm 14. The first and second robot arms 12, 14 are arranged for relative movement during operation of the industrial robot 2.

When the industrial robot 2 is subjected to severe gravitational torque, e.g. due to a heavy load L handling, this is balanced by the spring balancing device 1 using the spring arrangement 7. The spring housing 3 is coupled to the stand 6.

A connection rod 32 is coupled to the first robot arm 12 and to the spring counter force member 5 of the spring balancing device 1. The rod 32 can be disassembled from the first robot arm 12 after securing the spring arrangement 7 in a compressed state and disconnecting the rod 32 from the arrangement 7.

Fig. 2 shows in a cross-sectional view an example of a spring balancing device 1 more in detail. The spring balancing device 1 comprises a spring housing 3 of a cylindrical shape, extending along a central axis X and enclosing a compressed (biased) spring arrangement 7.

The spring balancing device 1 comprises a spring counter force member in the form of a plate 5 configured to provide a counter force F to hold the spring arrangement 7 in a compressed state. A locking member bore in the form of a through hole 10 is formed in a housing wall section 8 of the spring housing 3 and extends in a transversal direction Y relative the central axis X. Two locking members in the form of screws 9 extend through the through hole 10 and comprise a non-threaded portion 11 configured to be in contact with the plate 5 for holding the compressed spring arrangement 7.

Each screw 9 comprises a threaded portion (not shown) mating with a corresponding threaded bore section (not shown) of the through hole 10. The non-threaded portion 11 has such a length and extends in the transversal direction Y so that when the threaded portion is not engaged with the threaded bore section, the non-threaded portion 11 remains in contact with the plate 5 for retaining the holding state of the compressed spring arrangement 7.

In the example in Fig. 2, the through holes 10 for the locking members 9 are aligned and located on opposing sides of the spring housing, such that the locking members can be inserted into the housing from opposite directions in order to enter into contact with the plate 5 that holds the spring arrangement 7.

Fig. 3 shows a cross-sectional view in a transversal plane according to another example of a spring balancing device 1. A spring housing 3 comprises two through holes 10, which are positioned symmetrically in a plane P extending transverse to the central axis X. The through holes 10 are formed in a wall 8 of the spring housing 3 and extend in a transversal direction Y relative the central axis X.

The through holes 10 are arranged parallel to each other and exhibit a respective entry opening 18 facing from the same side of the spring housing 3. There is provided a distance between the entry openings 18, which distance may be defined in the plane P by an arc of a circle measuring an angle α of e.g. 50-110 degrees, preferably 70-90 degrees. A respective screw 9 extends through each through hole 10 and comprises a non-threaded portion 11 configured to be entirely or partly in contact with a plate 5. Each screw 9 also comprises a threaded portion 13 mating with a corresponding threaded bore section 15 of the through hole 10.

The respective screw 9 is formed with a first end comprising a screw driver slot and is configured to fit the entry opening 18 and a second end 24 is configured to be positioned at an imaginary line Z intersecting with the central axis X.

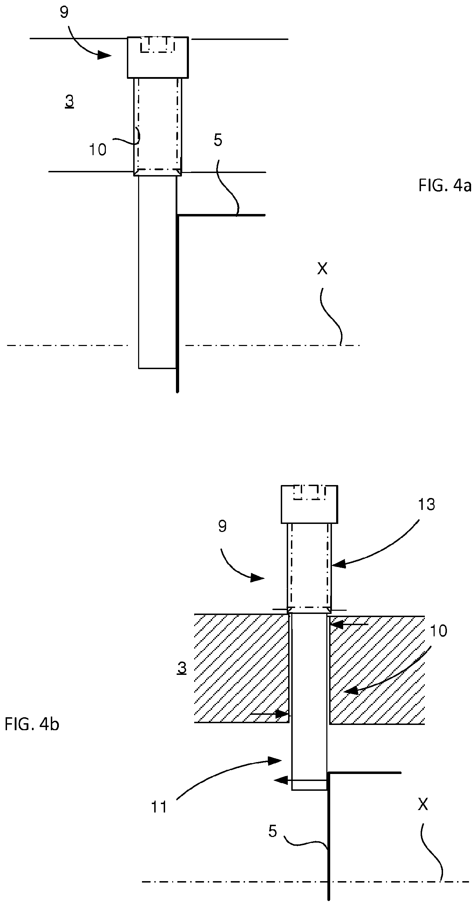

Figs 4a and 4b show in detail a screw 9 of a spring balancing device according to a further example, wherein unintentional unscrewing of the screw 9 still implies locking of the spring counter force member 5. Fig. 4a shows the screw 9 drawn in thread engagement with the threaded bore section of the through hole 10 of the spring housing 3 for securing the spring arrangement (not shown). The spring arrangement is held in a biased state, e.g. compressed or stretched, and will press the spring counter force member 5 in engagement with the screw 9.

Fig. 4b shows unintentional unscrewing of the screw 9. A non-threaded portion 11 of the screw 9 has such a length so that when a threaded portion 13 of the screw 9 is not engaged with a threaded bore section of the through hole in the spring housing 3, the non-threaded portion 11 remains in contact with the spring counter force member 5 for retaining the holding of the spring arrangement.

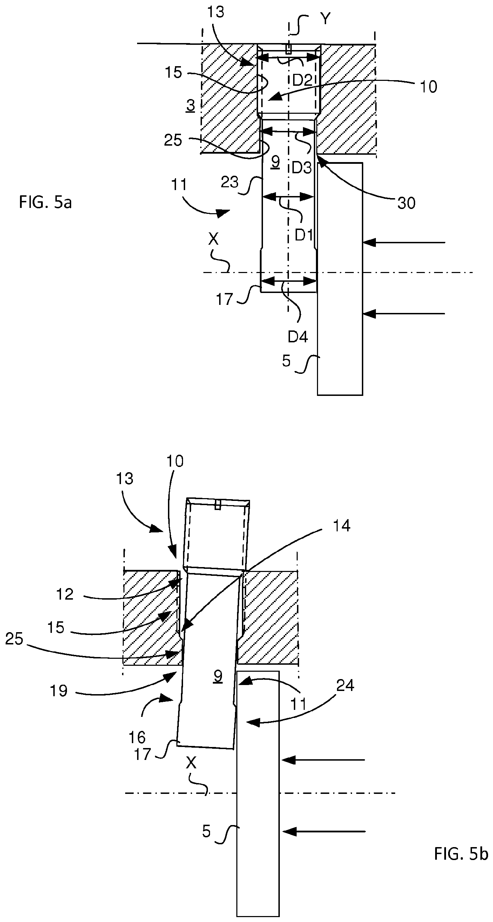

Figs. 5a and 5b show in detail a screw 9 according to a further example, providing that unintentional unscrewing of the screw 9 from the through hole 10 of the spring housing 3 implies continued holding of the spring holding plate 5. The state shown in Fig. 5a provides that the spring balancing device (not shown) can be disassembled or securely demounted by holding the spring arrangement (not shown) by means of the spring holding plate 5. The state shown in Fig. 5b implies that a disassembled spring balancing device still is safe to handle despite the fact that the screw 9 unintentionally has been unscrewed. The screw 9 will be jammed in the through hole 10 due to the "sticky drawer effect" and due to the fact that the spring holding plate 5 engaged with the screw 9 exerts a momentary force on an innermost end 24 of the screw 9.

The screw 9 per se comprises a threaded portion 13 that may extend at least one third of the length of the total length of the screw 9. The threaded portion 13 may be short and may comprise three thread turns or more. The remaining envelope surface of the screw 9 exhibits a non-threaded portion 11 configured to be in contact with the spring holding plate 5 for holding the spring arrangement (not shown).

A first bevelled portion 12 is formed between the threaded portion 13 and the non-threaded portion 11 (Fig. 5b) mating with a bevelled section 14 of the through hole 10. The non-threaded portion 11 comprises an enlarged portion 17 configured to be in contact with the plate 5 and positioned with its contact centre at an imaginary line Z (Fig. 3) intersecting with the central axis X. The enlarged portion 17 has a second bevelled portion 16 (Fig. 5b) configured to engage an edge area 19 of the through hole 10 for stop functionality. In such way the screw will hook in against the edge area 19 of the through hole 10 in case of unintentionally attempt to remove the screw 9 from the spring housing 3.

Furthermore, in this example, the screw 9 comprises an intermediate portion 23 (Fig. 5a) arranged between the threaded portion 13 and the enlarged portion 17. The intermediate portion 23 exhibits a smaller diameter D1 than a diameter D2 of the threaded portion 13 or a diameter D4 of the enlarged portion 17.

A non-threaded bore section 25 of the through hole 10 exhibits a diameter D3 that is larger than the diameter D1 of the intermediate portion 23 and also larger than the diameter D4 of the enlarged portion 17. A gap 30 is thus provided between the non-threaded portion 11 of the screw 9 and the non-threaded bore section 25 of the through hole 10, whereby is achieved that the screw 9 will be jammed due to the "sticky drawer effect" and due to centering error of the screw 9 relative the through hole 10 in case of unscrewing the screw 9. The non-threaded bore section 25 exhibits a smaller diameter D3 than the diameter D2 of the threaded bore section 15.

The invention is not limited to the embodiments shown above, but the person skilled in the art may modify or combine them in a plurality of ways within the scope of the invention as defined by the claims. The spring balancing device may comprise only one locking member or several locking members and corresponding bores. E.g. the locking member bores/the locking members may extend in different planes, and different angles in relation to the centre axis of the housing.

For example, any one of the embodiments of the locking member bores and locking members illustrated in Fig. 4a, 4b, 5a and 5c, may be combined with either one of the embodiments of the spring balancing devices shown in Fig. 2 or Fig. 3.

## Claims

1. A spring balancing device (1) comprising:
- a spring housing (3) enclosing a spring arrangement (7);
- a spring counter force member (5) configured to provide a counter force (F) to hold the spring arrangement (7);
- a locking member bore (10) formed in a housing wall section (8) of said spring housing (3);
- a locking member (9) extending through the locking member bore (10) and comprising a non-threaded portion (11) configured to be in contact with the spring counter force member (5) for holding the spring arrangement (7); wherein
- the locking member (9) comprises a threaded portion (13) mating with a corresponding threaded bore section (15) of the locking member bore (10); and **characterised in that**
- the non-threaded portion (11) has such a length so that when the threaded portion (13) is not engaged with the threaded bore section (15), the non-threaded portion (11) remains in contact with the spring counter force member (5) for retaining said holding of the spring arrangement (7).

2. The device according to claim 1, **wherein** the locking member bore (10) is positioned in a plane extending transverse to a central axis (X) of the spring housing.

3. The device according to claim 1 or claim 2, **wherein** the spring housing (3) comprises at least two locking member bores (10) and the device comprises a locking member for each locking member bore.

4. The device according to claim 3, **wherein** the locking member bores (10) are positioned symmetrically in a plane extending transverse to a central axis (X) of the spring housing.

5. The device according to claim 3 or 4 **wherein** the locking member bores (10) are arranged parallel to each other.

6. The device according to any of claims 3 to 5, **wherein** the locking member bores (10) exhibit a respective entry opening facing from the same side of the spring housing (3).

7. The device according to claim 6, **wherein** a distance between the entry openings is defined in said plane by an arc of a circle measuring an angle (α) of 50-110 degrees, preferably 70-90 degrees.

8. The device according to any of the preceding claims, **wherein** the locking member bore (10) comprises a non-threaded bore section (25) with a diameter (D3) smaller than the diameter (D2) of the threaded bore section (15).

9. The device according to any of the preceding claims, **wherein** a non-threaded bore section (25) of the locking member bore (10) exhibits a larger diameter (D3) than a diameter (D1) of the non-threaded portion (11) of the locking member (9) such that a gap is formed between the locking member bore and the locking member that produces a jamming effect between the locking member bore and the locking member.

10. The device according to any of the preceding claims, **wherein** the threaded portion (13) extends at least one third of the total length of the locking member (9).

11. The device according to any of the preceding claims, **wherein** a first bevelled portion (12) is formed between the threaded portion (13) and the non-threaded portion (11), the first bevelled portion (12) mating with a bevelled section (14) of the locking member bore (10).

12. The device according to any of the preceding claims, **wherein** the non-threaded portion (11) comprises an enlarged portion (17) configured to be in contact with the spring counter force member (5).

13. The device according to claim 12, **wherein** the enlarged portion (17) is positioned at an imaginary line (Z) intersecting with a central axis (X) of the spring housing.

14. The device according to claim 12 or 13, **wherein** the enlarged portion (17) exhibits a second bevelled portion (16) configured to engage an edge area (19) of the locking member bore (10).

15. The device according to any of the preceding claims and comprising at least two locking members located in their respective locking member bores, **wherein** the locking member bores (10) and the locking members (9) are located such that a contact force between the locking members and the spring counter force member (5) is evenly distributed on the spring counter force member.

16. An industrial robot comprising the spring balancing device according to any of claims 1-15.

## Patentansprüche

1. Federausgleichsvorrichtung (1), Folgendes umfassend:
- ein Federgehäuse (3), das eine Federanordnung (7) umschließt;
- ein Federgegenkraftelement (5), das dazu ausgelegt ist, eine Gegenkraft (F) vorzusehen, um die Federanordnung (7) zu halten;
- eine Verriegelungselementbohrung (10), die in einem Gehäusewandabschnitt (8) des Federgehäuses (3) ausgebildet ist;
- ein Verriegelungselement (9), das sich durch die Verriegelungselementbohrung (10) erstreckt und einen gewindefreien Abschnitt (11) umfasst, der dazu ausgelegt ist, mit dem Federgegenkraftelement (5) zum Halten der Federanordnung (7) in Kontakt zu stehen;
wobei
- das Verriegelungselement (9) einen Gewindeabschnitt (13) umfasst, der sich mit einem zugehörigen Gewindeabschnitt (15) der Verriegelungselementbohrung (10) verbindet; und **dadurch gekennzeichnet, dass**
- der gewindefreie Abschnitt (11) eine derartige Länge aufweist, dass, wenn der Gewindeabschnitt (13) nicht in den Gewindebohrungsabschnitt (15) eingegriffen ist, der gewindefreie Abschnitt (11) mit dem Federgegenkraftelement (5) zum Halten der Federanordnung (7) in Kontakt bleibt.

2. Vorrichtung nach Anspruch 1, wobei die Verriegelungselementbohrung (10) in einer Ebene positioniert ist, die sich quer zu einer Mittelachse (X) des Federgehäuses erstreckt.

3. Vorrichtung nach Anspruch 1 oder Anspruch 2, wobei das Federgehäuse (3) mindestens zwei Verriegelungselementbohrungen (10) umfasst und die Vorrichtung ein Verriegelungselement für jede Verriegelungselementbohrung umfasst.

4. Vorrichtung nach Anspruch 3, wobei die Verriegelungselementbohrungen (10) symmetrisch in einer Ebene positioniert sind, die sich quer zu einer Mittelachse (X) des Federgehäuses erstreckt.

5. Vorrichtung nach Anspruch 3 oder 4, wobei die Verriegelungselementbohrungen (10) parallel zueinander angeordnet sind.

6. Vorrichtung nach einem der Ansprüche 3 bis 5, wobei die Verriegelungselementbohrungen (10) eine entsprechende Eintrittsöffnung aufweisen, die von derselben Seite des Federgehäuses (3) zugewandt sind.

7. Vorrichtung nach Anspruch 6, wobei ein Abstand zwischen den Eintrittsöffnungen in der Ebene durch einen Kreisbogen, der einen Winkel (α) von 50-110 Grad, vorzugsweise 70-90 Grad aufweist, definiert ist.

8. Vorrichtung nach einem der vorstehenden Ansprüche, wobei die Verriegelungselementbohrung (10) einen gewindefreien Bohrungsabschnitt (25) mit einem Durchmesser (D3) aufweist, der kleiner als der Durchmesser (D2) des Gewindebohrungsabschnitts (15) ist.

9. Vorrichtung nach einem der vorstehenden Ansprüche, wobei ein gewindefreier Bohrungsabschnitt (25) des Verriegelungselements (10) einen größeren Durchmesser (D3) als den Durchmesser (D1) des gewindefreien Abschnitts (11) des Verriegelungselements (9) aufweist, sodass ein Spalt zwischen der Verriegelungselementbohrung und dem Verriegelungselement ausgebildet wird, was zu einer Blockierwirkung zwischen der Verriegelungselementbohrung und dem Verriegelungselement führt.

10. Vorrichtung nach einem der vorstehenden Ansprüche, wobei sich der Gewindeabschnitt (13) über mindestens ein Drittel der Gesamtlänge des Verriegelungselements (9) erstreckt.

11. Vorrichtung nach einem der vorstehenden Ansprüche, wobei ein erster abgeschrägter Abschnitt (12) zwischen dem Gewindeabschnitt (13) und dem gewindefreien Abschnitt (11) ausgebildet ist, wobei sich der erste abgeschrägte Abschnitt (12) mit einem abgeschrägten Abschnitt (14) der Verriegelungselementbohrung (10) verbindet.

12. Vorrichtung nach einem der vorstehenden Ansprüche, wobei der gewindefreie Abschnitt (11) einen vergrößerten Abschnitt (17) umfasst, der dazu ausgelegt ist, mit dem Federgegenkraftelement (5) in Kontakt zu stehen.

13. Vorrichtung nach Anspruch 12, wobei der vergrößerte Abschnitt (17) an einer gedachten Linie (Z) positioniert ist, die eine Mittelachse (X) des Federgehäuses schneidet.

14. Vorrichtung nach Anspruch 12 oder 13, wobei der vergrößerte Abschnitt (17) einen zweiten abgeschrägten Abschnitt (16) aufweist, der dazu ausgelegt ist, in einen Kantenbereich (19) der Verriegelungselementbohrung (10) einzugreifen.

15. Vorrichtung nach einem der vorstehenden Ansprüche und mindestens zwei Verriegelungselemente umfassend, die sich in ihren entsprechenden Verriegelungselementbohrungen befinden, wobei die Verriegelungselementbohrungen (10) und die Verriegelungselemente (9) derart angeordnet sind, dass eine Anpresskraft zwischen den Verriegelungselementen und dem Federgegenkraftelement (5) gleichmäßig auf dem Federgegenkraftelement verteilt ist.

16. Industrieroboter, der die Federausgleichsvorrichtung nach einem der Ansprüche 1-15 umfasst.

## Revendications

1. Dispositif d'équilibrage à ressort (1) comprenant :
- un logement de ressort (3) renfermant un agencement de ressort (7) ;
- un élément de force antagoniste de ressort (5) conçu de façon à fournir une force antagoniste (F) afin de maintenir l'agencement de ressort (7) ;
- un alésage d'élément de verrouillage (10) formé dans une section de paroi de logement (8) dudit logement de ressort (3) ;
- un élément de verrouillage (9) s'étendant à travers l'alésage d'élément de verrouillage (10) et comprenant une partie non filetée (11) conçue de façon à être en contact avec l'élément de force antagoniste de ressort (5) afin de maintenir l'agencement de ressort (7) ; dans lequel
- l'élément de verrouillage (9) comprend une partie filetée (13) s'accouplant avec une section d'alésage filetée correspondante (15) de l'alésage d'élément de verrouillage (10) ; et **caractérisé en ce que**
- la partie non filetée (11) présente une longueur telle que lorsque la partie filetée (13) n'est pas en prise avec la section d'alésage filetée (15), la partie non filetée (11) reste en contact avec l'élément de force antagoniste de ressort (5) afin d'assurer ledit maintien de l'agencement de ressort (7).

2. Dispositif selon la revendication 1, l'alésage d'élément de verrouillage (10) étant positionné dans un plan s'étendant transversalement par rapport à un axe central (X) du logement de ressort.

3. Dispositif selon la revendication 1 ou la revendication 2, le logement de ressort (3) comprenant au moins deux alésages d'élément de verrouillage (10) et le dispositif comprenant un élément de verrouillage pour chaque alésage d'élément de verrouillage.

4. Dispositif selon la revendication 3, les alésages d'élément de verrouillage (10) étant positionnés symétriquement dans un plan s'étendant transversalement par rapport à un axe central (X) du logement de ressort.

5. Dispositif selon la revendication 3 ou 4, les alésages d'élément de verrouillage (10) étant disposés parallèlement les uns aux autres.

6. Dispositif selon l'une des revendications 3 à 5, les alésages d'élément de verrouillage (10) présentant une ouverture d'entrée respective orientée du même côté que le logement de ressort (3).

7. Dispositif selon la revendication 6, une distance entre les ouvertures d'entrée étant définie dans ledit plan par un arc de cercle mesurant un angle (α) de 50-110 degrés, de préférence de 70-90 degrés.

8. Dispositif selon l'une quelconque des revendications précédentes, l'alésage d'élément de verrouillage (10) comprenant une section d'alésage non filetée (25) avec un diamètre (D3) inférieur au diamètre (D2) de la section d'alésage filetée (15).

9. Dispositif selon l'une quelconque des revendications précédentes, une section d'alésage non filetée (25) de l'alésage d'élément de verrouillage (10) présentant un diamètre (D3) plus grand qu'un diamètre (D1) de la partie non filetée (11) de l'élément de verrouillage (9), de sorte qu'un espace est formé entre l'alésage d'élément de verrouillage et l'élément de verrouillage, produisant un effet de coincement entre l'alésage d'élément de verrouillage et l'élément de verrouillage.

10. Dispositif selon l'une quelconque des revendications précédentes, la partie filetée (13) s'étendant sur au moins un tiers de la longueur totale de l'élément de verrouillage (9).

11. Dispositif selon l'une quelconque des revendications précédentes, une première partie biseautée (12) étant formée entre la partie filetée (13) et la partie non filetée (11), la première partie biseautée (12) s'accouplant avec une section biseautée (14) de l'alésage d'élément de verrouillage (10).

12. Dispositif selon l'une quelconque des revendications précédentes, la partie non filetée (11) comprenant une partie élargie (17) conçue de façon à être en contact avec l'élément de force antagoniste de ressort (5) .

13. Dispositif selon la revendication 12, la partie élargie (17) étant positionnée sur une ligne imaginaire (Z) coupant un axe central (X) du logement de ressort.

14. Dispositif selon la revendication 12 ou 13, la partie élargie (17) présentant une seconde partie biseautée (16) conçue de façon à entrer en prise avec une zone de bord (19) de l'alésage d'élément de verrouillage (10) .

15. Dispositif selon l'une quelconque des revendications précédentes et comprenant au moins deux éléments de verrouillage placés dans leurs alésages d'élément de verrouillage respectifs, les alésages d'élément de verrouillage (10) et les éléments de verrouillage (9) étant placés de telle sorte qu'une force de contact entre les éléments de verrouillage et l'élément de force antagoniste de ressort (5) soit répartie uniformément sur l'élément de force antagoniste de ressort.

16. Robot industriel comprenant le dispositif d'équilibrage à ressort selon l'une quelconque des revendications 1 à 15.
